# EUROPEAN PATENT SPECIFICATION

(11) **EP 1 829 015 B1**
(45) Date of publication and mention of the grant of the patent: **01.05.2019**
(21) Application number: 05852857.1
(22) Date of filing: 02.12.2005
(51) Int. Cl.: G09B 23/28, G09B 23/30

(54) **TRAUMA TRAINING MANNEQUIN**
TRAUMA-TRAININGS-MANNEQUIN
MANNEQUIN D'ENTRAÎNEMENT À LA GESTION D'UN TRAUMATISME

(30) Priority: 02.12.2004 US 635432 P
(43) Date of publication of application: 05.09.2007
(73) Proprietor: UNITED STATES GOVERNMENT AS REPRESENTED BY THE U.S. ARMY, Fort Detrick, Maryland 21702-5012 (US)
(72) Inventor: KING, Lynn, R., Kearney, Nebraska 68847 (US)
(74) Representative: Viering, Jentschura & Partner mbB Patent- und Rechtsanwälte
(86) International application number: PCT/US2005/043771
(87) International publication number: WO 2006/060724

(56) References cited:
- WO-A-96/42076
- US-A- 2 213 270
- US-A- 3 027 655
- US-A- 3 027 655
- US-A- 3 852 893
- US-A- 4 773 865
- US-A- 5 634 797
- US-A- 5 890 908
- US-B1- 6 234 804
- US-B1- 6 234 804
- US-B1- 6 527 558
- US-B2- 6 790 043

## Description

### I. Field of the Invention

This invention relates to a mannequin for training medical personnel like first responders, medics, and EMTs on treating a hemorrhage.

### II. Background of the Invention

Mannequins are used to train individuals in a variety of medical situations from CPR to emergency room situations. As a result, the complexity of the mannequin is impacted by the intended simulations to be performed with the mannequin. The basic mannequin is a partial (or whole) human body that allows the user to interact with it, for example, a CPR mannequin allows for chest compression and assisted breathing but could not be used to simulate other medical situations. At the other end of the spectrum, training mannequins are complex devices that have a variety of applications that are controlled by software and allow the trainer to use a variety of simulations that allow for a simulation tree such that the simulation reacts to the choices made by the trainees. Consequently, the complex mannequins are not suited for a large training core, because of the need to train the trainers on how to use the entire system. In addition, as the complexity of the mannequins increases, so does the fragility of the mannequin such that the mannequin is not suited for in-field training.

U.S. Patent No. 6,234,804 discloses a thoracic training model for endoscopic cardiac surgery. The model includes a model thorax having an internal cavity and a plurality of ribs, intercostal spaces between the ribs, and a heart located in the internal cavity. The heart has a coronary artery on which surgical training can be performed. The model also may include a fluid system in communication with the heart to provide a pressurized fluid to the coronary artery to simulate bleeding when the artery is cut.

UK Patent Application No. GB 2,292,825 A discloses an inflatable figure that can expand and contract in a manner that provides animated body and/or limb movements and postures when subjected to different internal fluid pressures by a valve regulator. The inflatable figure may be controlled by radio remote control.

Notwithstanding the usefulness of the above-described methods, a need still exists for a trauma training mannequin that requires little training in its use and is durable and rugged enough for field use.

### III. Summary of the Invention

The present invention provides a mannequin as featured in the independent claim. Preferred embodiments of the present invention are described in the dependent claims.

A system for use in training medical personnel in handling a trauma situation where the system includes a mannequin, a container, a flow controller, and at least one wound site for simulating a hemorrhage situation. In at least one embodiment, the system includes a plurality of wound sites that have their respective fluid flows controlled by the flow controller. In at least one embodiment, the system further includes an audio system for providing audio cues to the simulation participants to enhance the realism of the simulation.

At least one exemplary embodiment according to the invention is a mannequin for use in hemorrhage training, the mannequin including: a body resembling at least a portion of a human body, a container housed within the body, the container capable of holding fluid to simulate a hemorrhage, a flow controller housed within the
within the body and fluid communication with the container, and at least one wound site in fluid communication with the flow controller.

At least one exemplary embodiment according to the invention is a mannequin for use in hemorrhage training including: a body means for simulating at least a portion of a human body exterior, a storage means for storing fluid for creating a hemorrhage, at least one wound site located on the body means, and a flow control means for controlling the flow of the fluid from the storage means to the at least one wound site.

At least one exemplary embodiment according to the invention is a mannequin system including: a member in the shape of a torso, a container within the body, a pump in fluid communication with the container, an activation mechanism connected to the pump, a manifold connected to the pump, a plurality of fluid dispersing lines connected to the manifold, each fluid dispersing line including a valve connected to the manifold, and a connector connected to the valve, and a plurality of body parts for attachment to the member, at least one of the body parts includes a connector capable of establishing fluid communication with the connector of at least one of the fluid dispersing lines, and a wound site having an opening for dispersing fluid, the wound site connected to the connector.

Given the following enabling description of the drawings, the apparatus should become evident to a person of ordinary skill in the art.

### IV. Brief Description of the Drawings

The aspects of the present invention will become more readily apparent by describing in detail illustrative, non-limiting embodiments thereof with reference to the accompanying drawings.

The use of cross-hatching within these drawings should not be interpreted as a limitation on the potential materials used for construction of the invention. Like reference numerals in the figures represent and refer to the same element or function.
FIGs. 1A and 1B illustrate block diagrams of exemplary embodiments according to the invention.
FIG. 2 illustrates a block diagram of an exemplary embodiment according to the invention.
FIGs. 3-6 depict a combination of exemplary embodiments according to the invention.
FIG. 7 illustrates a block diagram of an exemplary embodiment according to the invention.
FIGs. 8-10 depict a combination of exemplary embodiments according to the invention.
FIG. 11 illustrates a block diagram of a system of an exemplary embodiment according to the invention.
FIG. 12 depicts an implementation of the system depicted in FIG. 11.
FIGs. 13-15 illustrate another exemplary embodiment according to the invention.
FIG. 16 depicts another exemplary embodiment according to the invention.

### V. Detailed Description of the Drawings

The invention includes a trauma training mannequin system. In the exemplary embodiments discussed below and illustrated in the attached Figures, the trauma training mannequin system includes a mannequin 100 having a body resembling at least a portion of a human, at least one fluid path available between a fluid source such as a container 110 and a simulated wound 102 to replicate a hemorrhage, and a flow controller 120 regulating fluid flow. In at least one exemplary embodiment, the system includes an audio capability to provide either recorded sounds and/or sounds created during the simulation to provide an added realism factor to the simulation. In at least one exemplary embodiment, the system includes a remote controller 160 for at least partial operation of the system by the trainer allowing unfretted access to the mannequin 100 by the trainees.

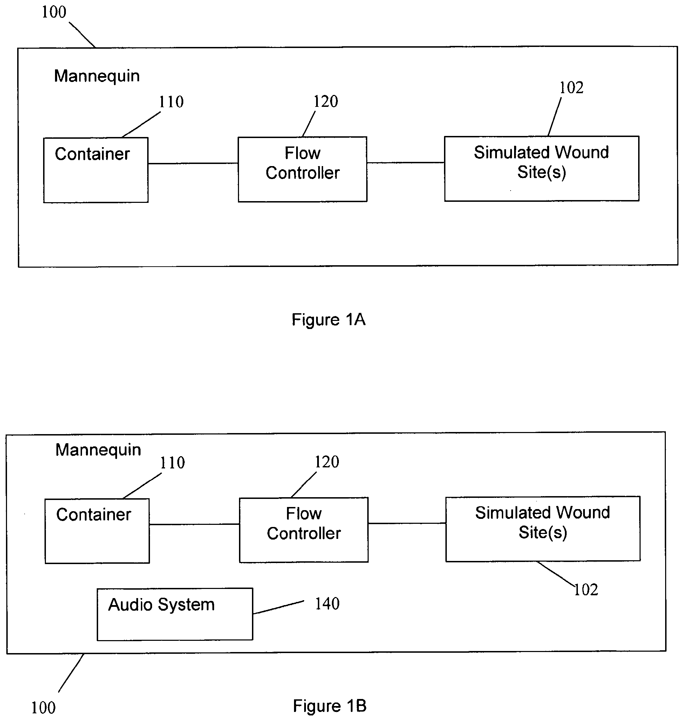

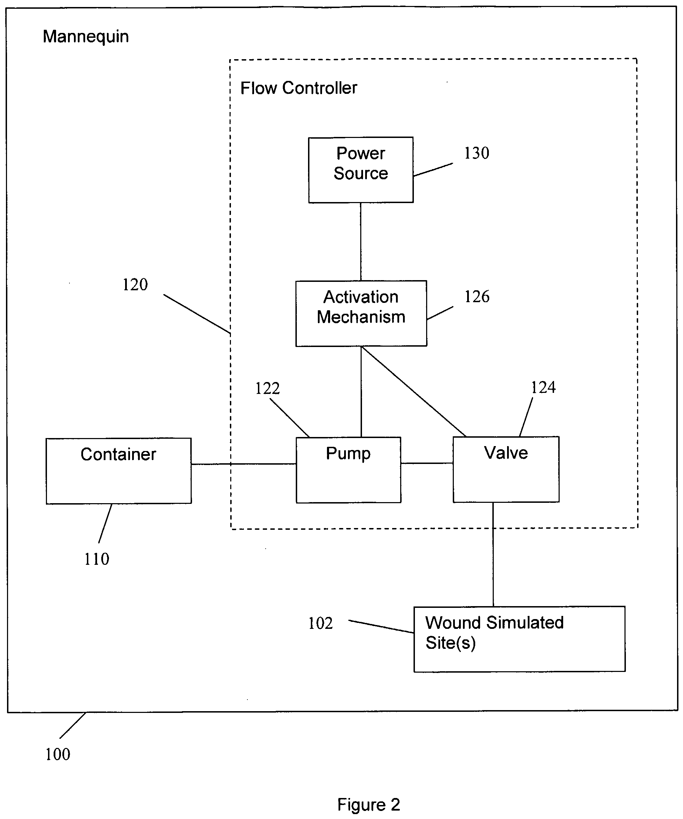

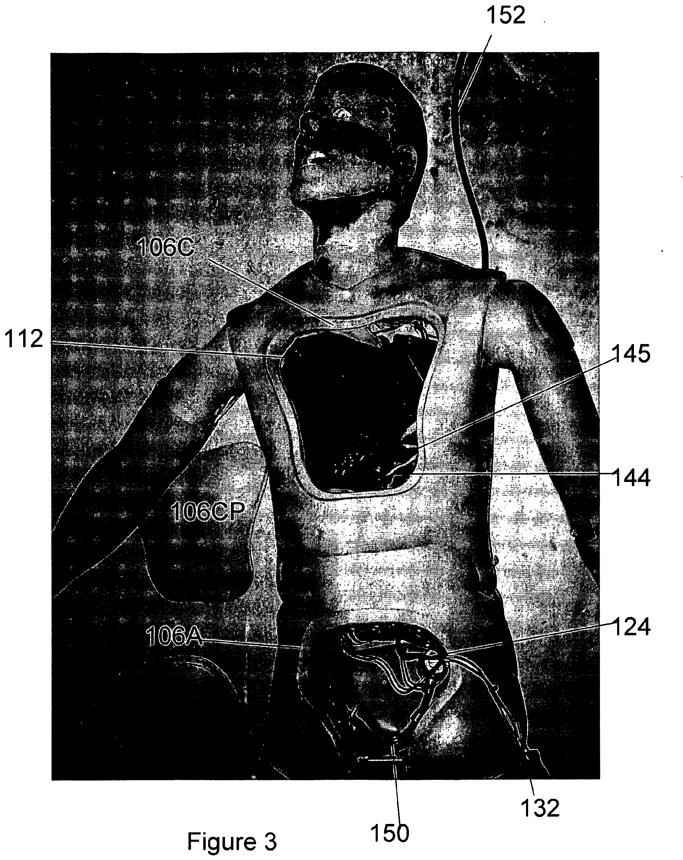

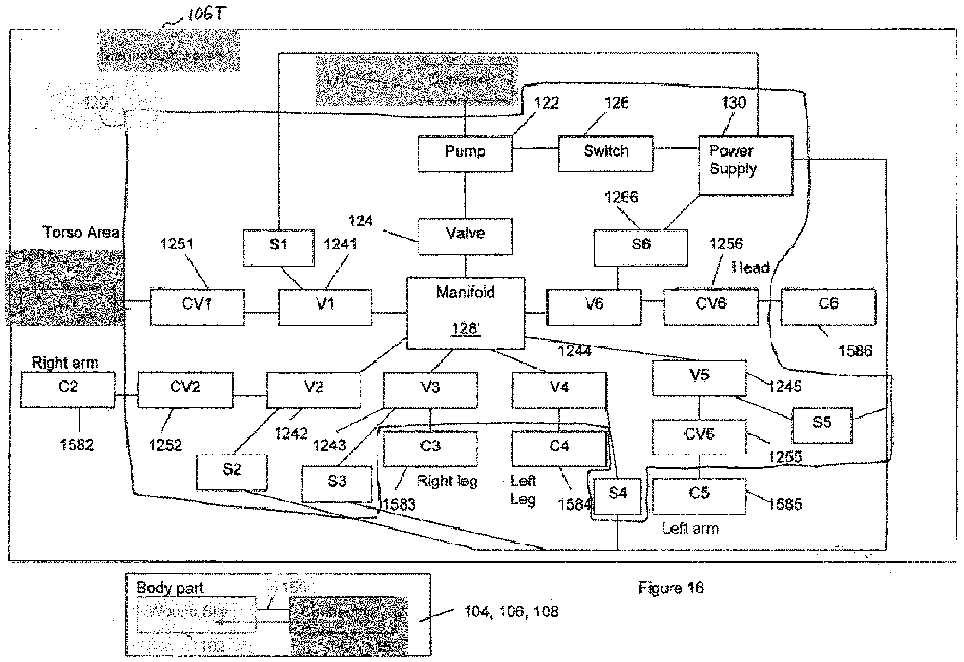

FIG. 1A illustrates a conceptual overview of an exemplary embodiment according to the invention that includes a mannequin 100 housing a container 110 and a flow controller 120 and having a simulated wound site 102. Conduit 150 connects the container 110 to the flow controller 120 and the flow controller 120 to the simulated wound site 102. Different exemplary embodiments include at least one simulated wound site 102, and when there is a plurality of simulated wound sites 102, the flow controller 120 will include a system of valves 124 for routing fluid to the different wound sites 102. Exemplary flow controllers 120 include a pump 122, at least one valve 124 and a power supply 130 as illustrated, for example, in FIGs. 2 and 16. The container 110 and flow controller 120 may be housed in a variety of locations within the mannequin 100 and still provide easy transport of the mannequin 100 outside and during a particular simulation. Exemplary locations include the torso area 106 as illustrated, for example, in FIGs. 3-6, the head 104, and the extremities 108, or any combination depending upon the implementation and the amount of fluid desired to be available for a particular simulation. Placement of the container 110 and the flow controller 120 in the torso 106 provides the greatest flexibility for placement of the wound sites 102 particularly in an implementation where fluid is routed to wound sites in a variety of locations.

As illustrated in FIG. 1A, the container 110 and the flow controller 120 are contained within the external surface of the mannequin 100, which provides protection for these components. The container 110 as illustrated in the implementation Figures is a separate component; however, the container 110 may be built into or integrally formed with the mannequin 100 as storage space such as a reservoir. Exemplary mechanisms to refill the reservoir include a retractable (or storable) conduit 152 as illustrated, for example, in FIGs. 3, 9, and 10 and a cap sealing an opening. The flow controller 120, 120' are illustrated as being mounted to the inside of the chest and abdomen cavities in the implementation Figures. The flow controller 120, 120' may instead be housed in specific compartments formed on the inside of the mannequin 100.

FIG. 1B illustrates a conceptual overview of an exemplary embodiment that adds an audio system 140 to the mannequin 100. The audio system 140 provides audio cues for the individuals participating in the simulation with the mannequin 100. In the exemplary embodiments having the audio system 140, the audio system 140 includes a speaker 142 located in the head region 104 of the mannequin 100.

FIG. 2 illustrates an exemplary embodiment of the flow controller 120 having a power supply 130 and an activation mechanism 126 connected to a pump 122 and a valve 124.

Examples of the activation mechanism 126 include a switch, button, or dial that is manually activated. The activation mechanism as illustrated in FIG. 3 includes a remote control 160 that signals a switch or adjustable controller that allows the simulation to be control externally of the mannequin 100. The variable adjustment of the power supplied to the pump 122 will allow the fluid volume to be controlled to allow for varying amounts of fake blood flow to occur during a particular simulation.

FIGs. 3-6 illustrate an exemplary embodiment that is a retrofit of the system in a mannequin 100 having a chest cavity 106C and an abdomen cavity 106A that typically are filled with parts for use in simulations involving, for example, scope procedures and CPR. The cavities 106C, 106A of the mannequin 100 have been emptied and filled with the container 110, the flow controller 120, and conduit 150. The illustrated embodiment also shows an audio system 140 implementation that may be omitted. The illustrated flow controller 120 includes a power supply 130, an activation mechanism 126, a pump 122, and a valve 124. Each of the illustrated components is mounted on a surface of one of the cavities 106C, 106A to be securely held in place.

The container 110 can be a variety of sizes, but as illustrated in FIG. 3 is a ten (10) liter collapsible container. The size is constrained by the space inside the mannequin and the desire to have ample storage of fluid for a particular hemorrhage simulation. The container 110 supplies the fluid such as fake blood to the system. The container 110 as illustrated is mounted on the inside of the chest cavity 106C of the mannequin 100, but alternatively may be a compartment integrally formed with the mannequin 100.

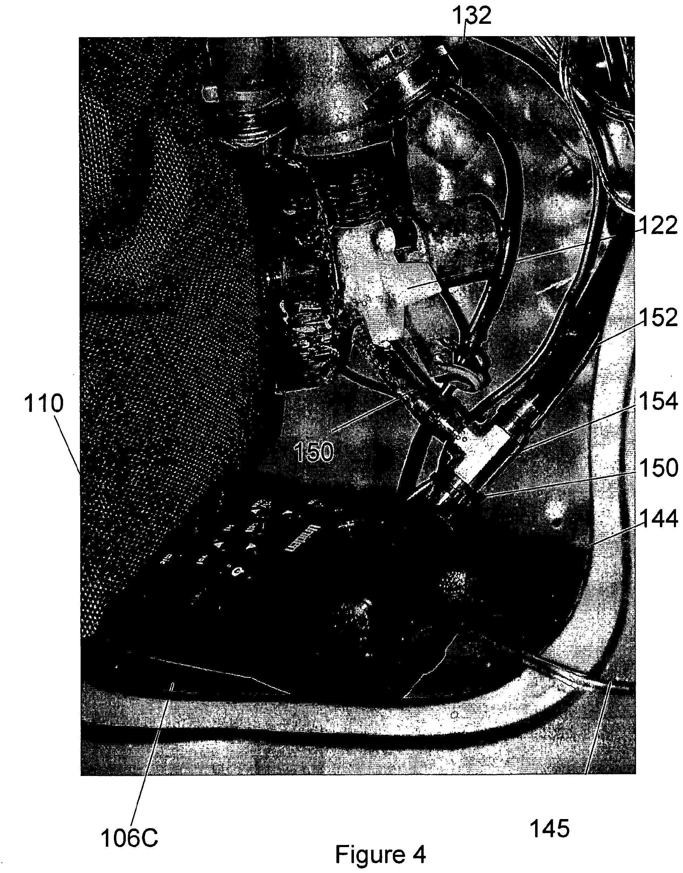

The pump 122 may be directly connected to the container 110 as illustrated, for example, in FIG. 3; however, the pump 122 also may connect to the container 110 through a conduit 150. As illustrated in FIG. 4, the pump 122 is mounted on the container 110. The pump 122 is powered by the power supply 130 to pump the fake blood into the conduit 150 connected to the wound site(s) 102 to simulate a hemorrhage in the mannequin 100.

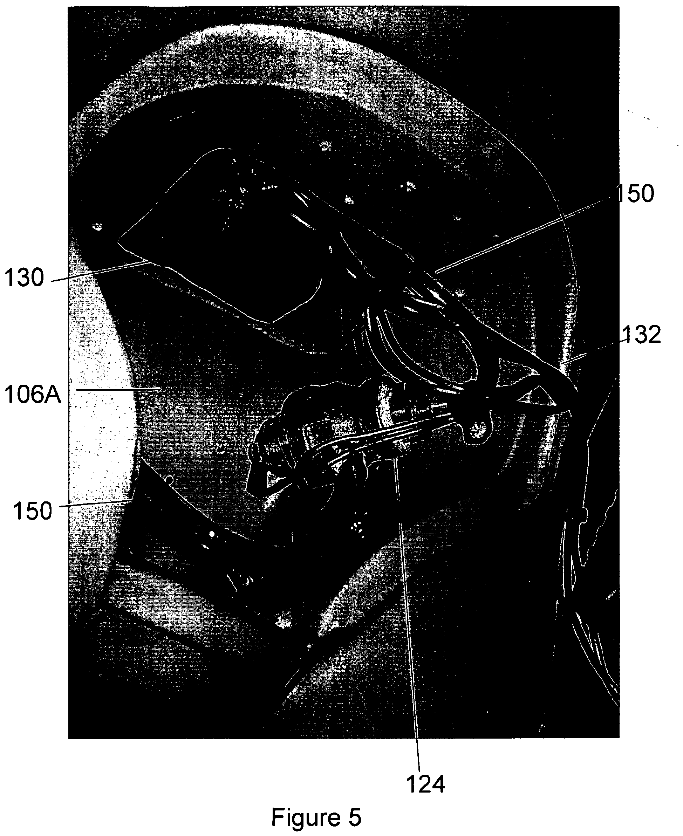

To allow for portability of the mannequin 100 during training, the illustrated mannequin 100 in FIG. 5 houses a power supply 130 located in a space above the abdomen area 106A that is encased in a protective cover to protect the power supply 130 from any leakage that might occur from the container 110 or one of the fluid connection points. An exemplary power supply 130 is a 12 volt rechargeable battery. The presence of the power supply 130 will provide for a more realistic simulation, because typically a power cord is not present on humans.

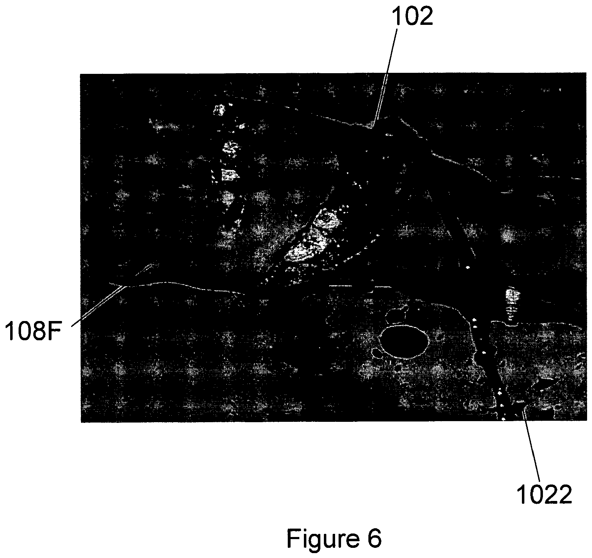

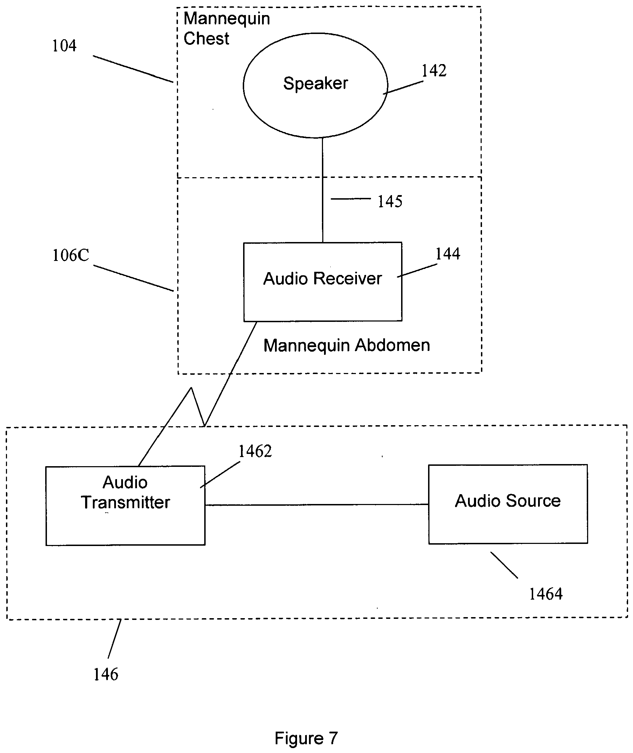

The valve 124 illustrated in FIG. 5 allows the mannequin to be seated upright without worrying about fluid leakage when the pump 122 is not operating and further drainage of the fake blood present between the pump 122 and the valve 124 after the pump 122 is turn off. An exemplary valve 124 is a solenoid inside a pipe fitting as illustrated in FIG. 5. The solenoid as illustrated is activated when the pump 122 is operating. The activation mechanism 126 controls provision of power to both the valve 124 and the pump 122. One of ordinary skill in the art will appreciated based on this disclosure that the valve 124 may be omitted while still maintaining the usefulness and novelty of the system. As illustrated, the valve 124 is located in the abdomen cavity 106A and is connected via conduit 150 to the pump 122. The valve 124 is mounted on a wall of the abdomen cavity 106A and includes an output connected to conduit 150 running to the wound site 102 on the mannequin 100, which for the mannequin 100 illustrated in FIGs. 6 and 7 is located on the top of the foot 108. FIG. 6 also illustrates the exemplary embodiment in operation with a stream of fake blood 1022 being projected out of the wound site 102. The location of the wound site 102 could be anywhere on the exterior of the mannequin 100 and may be in multiple locations to teach the need to carefully check a patient for multiple hemorrhage sites.

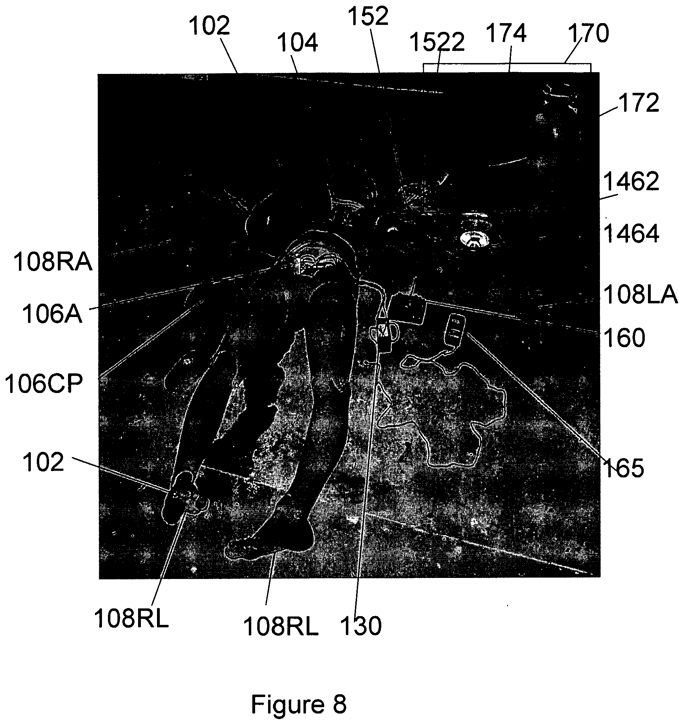

FIGs. 3, 4 and 7 illustrate the exemplary embodiment with an audio system 140 that may be omitted from the illustrated exemplary embodiment. The illustrated audio system 140 includes an internal audio source (or audio receiver) 144, which is illustrated as a walkie-talkie that is mounted on the bottom of the chest cavity 106C that receives (or provides) an audio feed for relaying to a speaker 142 located in the head 104 via a cable 145. In the illustrated embodiment the audio source 144 receives a wireless signal from an external audio source 146. As illustrated in FIGs. 7 and 8, the external audio source 146 includes an audio transmitter 1462, which is illustrated as a walkie-talkie, that is in wireless communication with the internal audio source 144 (although the link could be wired) and an audio source 1464, which is illustrated as a CD player in FIG. 8, connected by a cable 145 that is illustrated as including a RCA connection. In at least one exemplary embodiment, the audio transmitter 1462 is integrally formed with the audio source 1464. In at least one exemplary embodiment, the audio system 140 is completely located in the head 104 with the audio source 1464 in the head 104 with the speaker 142 being connected to or integrally formed with the audio source 1464. Although walkie-talkies are illustrated in FIGs. 3 and 4, other wireless communication devices could be used.

FIGs. 8-10 illustrate a complete exemplary embodiment that includes a refill system 170, the audio system 140 with a remote audio source 146, a battery recharger 165, and a remote control 160. Each of the extremities 108RA, 108RL, 108LL, and 108LA is able to be switched out and replaced with other extremities that may include a variety of wound sites 102. The audio system 140 is discussed above. The battery recharger 165 is illustrated as an exemplary way to provide a power supply 130 that is reusable. The remote control 160 is the illustrated mechanism to control the operation of the activation mechanism 126 and in at least one exemplary embodiment at least one valve 124.

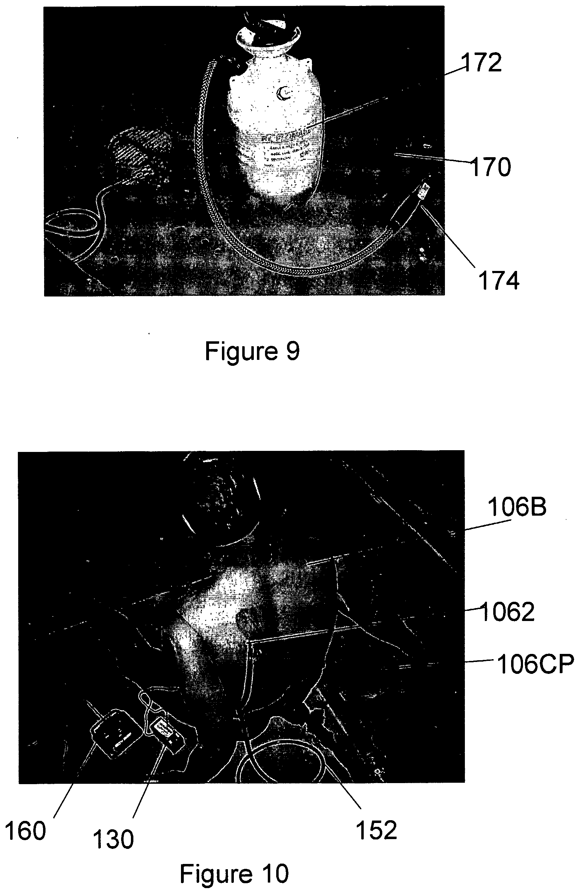

The refill system 170 includes a conduit 152 connected to the container 110 via a T-connector 154 that provides the connection point into the fluid system as illustrated in FIG. 4. Although the refill system 170 is illustrated, for example, in FIGs. 4 and 8-10, it may be omitted and the container 110 refilled by disconnecting the container 110 from the pump 120. As illustrated in FIG. 10, the refill conduit 152 exits from the back 106B of the mannequin 100 through an opening 1062 that is covered during simulations when the refill conduit 152 is placed inside the mannequin 100. The illustrated refill conduit 152 includes a female quick release connector 1522 to connect it to an external container 172 having a male quick release connector 174. The external container 172 as illustrated is a manual pressurized container 172 that can be used to refill the container 110 with a pressure stream of fluid. A variety of other external containers 172 may be used to accomplish the function of refilling the fluid reservoir 110.

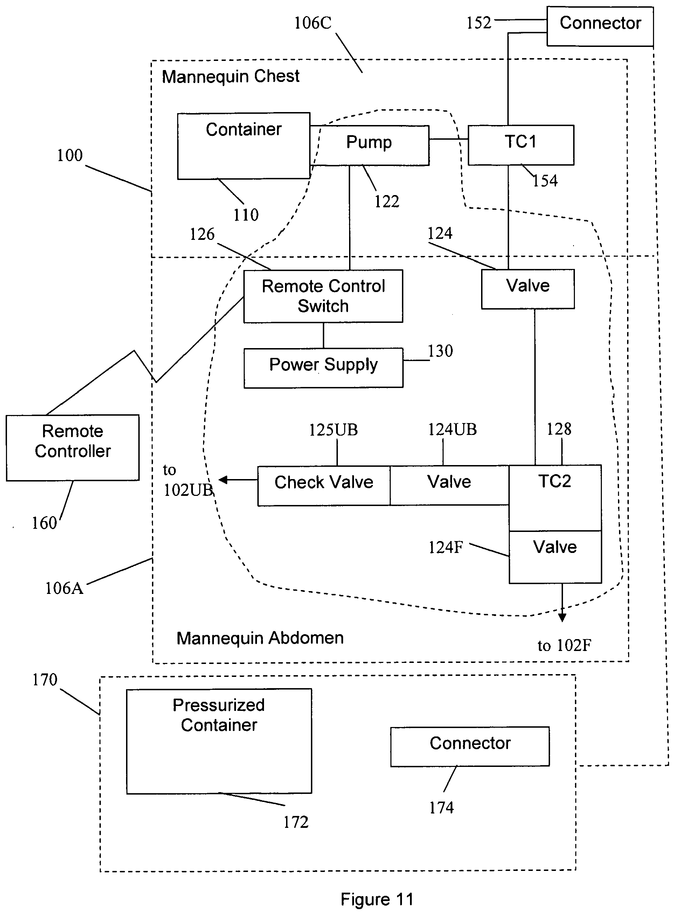

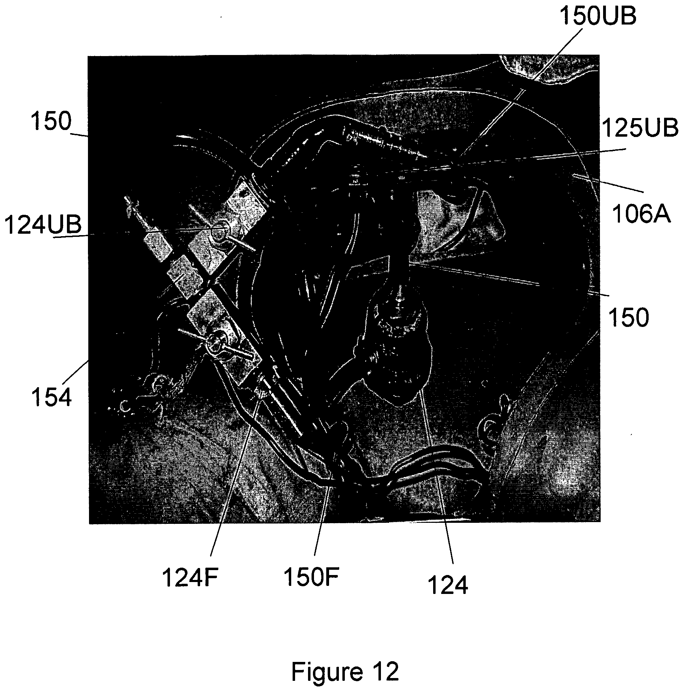

FIGs. 11 and 12 illustrate an exemplary embodiment having a pair of wound sites 102 connected to the flow controller 120. The foot wound site 102F remains connected in the illustrated exemplary embodiment, but there is also an upper body wound site 102UB added. The illustrated configuration includes a T-connector (or Y-connector) 128 connected to the valve 124 for providing two fluid streams to the wound sites 102F, 102UB. Illustrated in FIG. 12, the conduit 150F, 150UB for each wound site 102F, 102UB is connected to the T-connector 128 through needle valves 124F, 124UB that manual control the amount of fluid sent to the two respective wound sites 102F, 102UB. The conduit 150UB leading to the upper body wound site 102UB also is illustrated as including a check valve (or other one way valve) 125UB after the needle valve 124UB. The check valve 125UB prevents fluid backflow in the system resulting from gravity if the mannequin 100 is seated or in a similar position where the head 104 is above the abdomen 106A. Although needle valves are illustrated in FIG. 12, these valves can be any valve that allows for fluid volume control including electrically control valves, which have the added benefit of fluid flow adjustment (including via a remote controller 160) during the course of the simulation between the two wound sites. FIG. 11 also illustrates the pressurized refill container 172 and the mechanism 152, 174 for connection into the fluid system internal to the mannequin 100. FIG. 11 illustrates the system with a wireless remote controller 160 for activation of the pump 122 and valve 124 through activation mechanism 126.

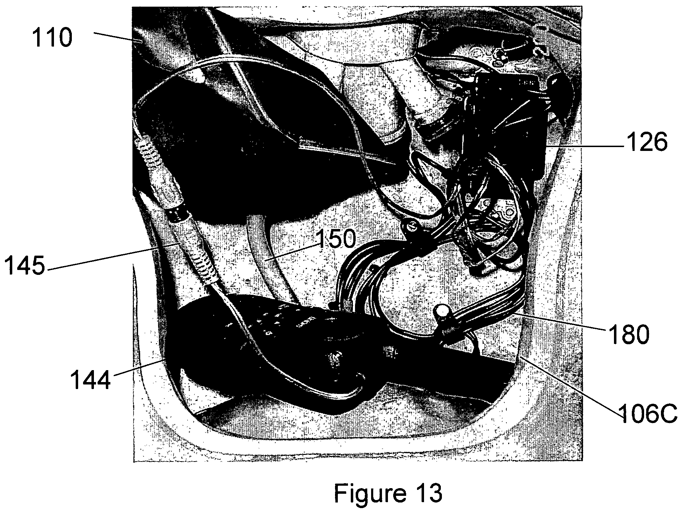

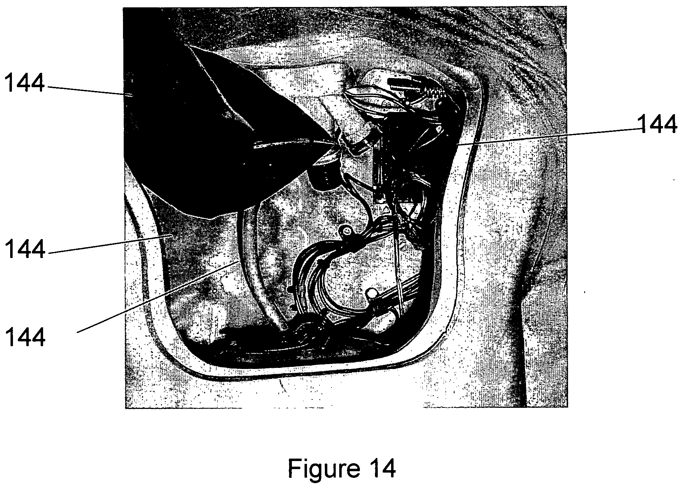

FIGs. 13-15 illustrate the chest and abdomen cavities 106C, 106A of the mannequin 100 with another exemplary embodiment. The wire harness 180 present in the chest cavity 106C in FIGs. 13 and 14 includes wires 145 for the audio system 140 and power cables 132. The container 110, the control switch 126 of the flow controller 120', and the walkie-talkie 144 during use are located in the chest cavity 106C and covered by a chest plate 106CP. FIG. 14 illustrates the chest cavity 106C without the walkie-talkie and the container 110 substantially removed from the cavity 106C. The container 110 connects to the pump 122 through conduit 150 which runs between the two cavities 106C, 106A. The container 110 illustrated in FIGs. 13 and 14 is a flexible bag similar to that of a blood or IV bag that holds approximately 1 liter. Different size containers can be utilized along with the container being harden plastic or flexible material or built into the mannequin 100. The illustrated activation mechanism 126 faces out of the mannequin 100 and is accessible from the rear 106B of the mannequin 100. The activation mechanism 126 in this exemplary embodiment is a switch or other toggle mechanism.

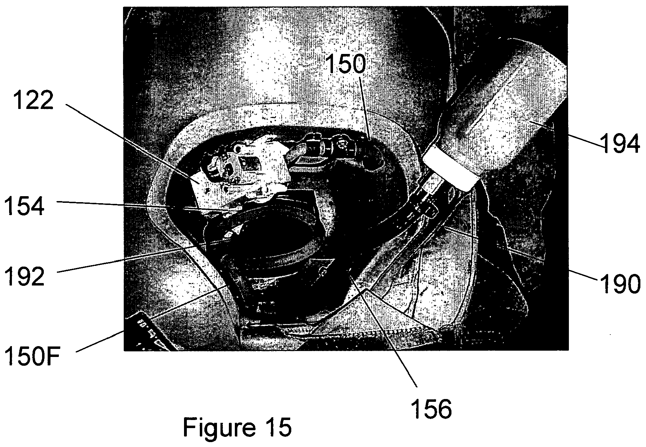

The abdomen cavity 106A in FIG. 15 is illustrated as housing a flow controller 120', a backflow system 190, and a power supply 130. The illustrated flow - controller 120' includes a pump 122, which is illustrated as a gravity pump, and a T-connector 128. The T-connector 128 allows for connection of the backflow system 190, which handles any backflow resulting from treatment during a simulation such as application of a tourniquet. The backflow system 190 illustrated in FIG. 15 includes a conduit 156 with a back pressure diaphragm (or other one way valve) 192 and a backflow container 194, which is illustrated as a bottle but may be a variety of containers. Alternatively, the container 110 with a feedback conduit 156 recycling the fluid back to the container 110 may take the place of the container 194. The connection between the power supply 130 and the pump 122 is controlled by the activation mechanism 126 present in the chest cavity 106C.

FIG. 16 illustrates an exemplary embodiment having connection points for providing fluid to multiple extremities to fit the hemorrhage simulation to be run. The illustrated arrangement avoids the need to reconfigure the device between simulations. FIG. 16 illustrates the container 110, the flow controller 120" and a plurality of connectors 1581-1586 being present in the torso 106T of the mannequin 100. The container 110 either connects directly to the flow controller 120" or through a conduit 150. The flow controller 120" when having multiple fluid elements as illustrated in FIG. 16 may have those fluid elements connected directly or with conduit 150. The plurality of connectors 1581-1586 connect either directly or with conduit 150 to the flow controller 120" and different connectors may be connected in different ways to the flow controller to form fluid flow paths to wound site(s) when the respective valve 1241-1246 is open.

The system allows for uninjured and injured body parts to be connected to the torso, which acts as the hub for the system. The body parts, for example, include a right arm, a right leg, a left leg, a left arm, and a head along with outer layers of the torso being able to be interchanged to provide a variety of wound site combinations. Alternatively, a body part could be omitted as a potential host of a wound site and thus eliminate one of the connectors and corresponding portion of the flow controller or if multiple flow connections to different parts are desired, then at least one fluid flow path can be added beyond what is illustrated in FIG. 16. Each wound site body part will include a wound site 102, a conduit 150, and a connector 159. The conduit 150 connects the wound site 102 to the connector 159. The connector 159 of the body part is designed to attach to a respective connector 1581-1586 in the torso 106.

The flow controller 120" as illustrated in FIG. 16 includes a pump 122, a valve 124, and a manifold 128 that are interconnected by conduit 150. The pump 122 and the valve 124 are similar to the pump 122 and valve 124 discussed above and as discussed above the valve 124 may be omitted. The pump 122 and the valve 124, when present, are on when activated by the activation mechanism (or switch) 126 that completes the circuit with the power supply 130.

The illustrated flow controller 120" includes a plurality of fluid flow paths extending out from the manifold 128' to be able to connect to a plurality of body parts and provide fluid to any wound sites that might be present on those body parts. Each fluid flow path includes a valve 1241-1246 that connect either directly to the manifold 128' or through a conduit 150. Each valve 1241-1246 is illustrated as being independently controllable by individual switches S1-S6 or a control matrix for sending control signals to the respective valves. The switches S1-S6 complete the electrical circuit between the respective valve 1241-1246 and the power supply 130. Alternatively, the valves 1241-1246 may be manually controlled instead of electrically controlled. The valves 1241-1246 are similar to the various valves discussed above and as such a variety of valve types may be used.

The fluid flow paths for the torso, the right arm, the left arm, and the head each include a check valve (or other one way valve) 1251 , 1252, 1255, and 1256 to prevent back flow of the fluid from a body part when it is located above the manifold 128'. The fluid flow paths for the legs may also include the check valve. Each check valve is illustrated as being connected to the respective valve by conduit 150. The end of the flow path for the flow controller 120" is a connector 1581-1586 that is able to connect with a respective body part 104, 106, 108 that has a wound site.

The pump 122 and the system of valves 124, 1241-1246 in at least one exemplary embodiment are controllable with a remote controller 160 (not shown in FIG. 16). This remote operation allows for additional control other the routing of fluid through the system including development of additional hemorrhage sites during the course of a particular simulation such as in response to restrictions (like tourniquets) on blood flow or general degradation of the patient over time.

It will be understood that each block of the flowchart illustrations and block diagrams and combinations of those blocks can be implemented by means for performing the illustrated function.

## Claims

1. A mannequin (100) for use in hemorrhage training, said mannequin comprising:
a body resembling at least a portion of a human body;
a container (110) housed within said body, said container (110) capable of holding fluid to simulate a hemorrhage;
a flow controller (120) housed within said body and in fluid communication with said container (110);
**characterised in that** the mannequin further comprises a remote control (160) for controlling the operation of the flow controller (120); and a plurality of wound sites (102) in fluid communication with said flow controller (120) where each wound site (102) is connected to said flow controller (120) through a conduit (150) for that wound site (102), the conduit (150) connecting the wound site (102) to a connector (159) of a body part, which connector (159) is designed to attach to a respective connector (1581-1586) in a torso area (106) of the mannequin (100) that are in fluid communication with said flow controller (120).

2. The mannequin (100) according to claim 1, wherein said flow controller (120) includes:
a pump (122) in fluid communication with said container (110);
a power supply (130) housed in said body; and
an activation mechanism (126) connected to said power supply (130) and said pump (122).

3. The mannequin (100) according to claim 2, wherein said flow controller (120) further includes:
a valve (124) connected to said conduit (150) connected to said pump (122); and
a second conduit connecting said valve (124) to said wound site (102).

4. The mannequin (100) according to claim 3, wherein said valve (124) includes a solenoid connected electrically to said activation mechanism (126).

5. The mannequin (100) according to any one of claims 2-4, wherein said flow controller (120) further includes:
a branch connector connected to said pump (122);
a first valve connected to said branch connector;
a first wound site conduit connected to said first valve;
a second valve connected to said branch connector; and
a second wound site conduit connected to said second valve; and
said at least one wound site (102) includes:
a first wound site connected to said first wound site conduit; and
a second wound site connected to said second wound site conduit.

6. The mannequin (100) according to any one of claims 2-4, further comprising a back flow system (190) including:
a branch connector connected to said pump (122);
a back flow conduit connected to said branch connector;
a check valve present in said back flow conduit; and
a back flow container (194) connected to said back flow conduit; and
said flow controller (120) including a wound site conduit connecting said branch connector to said wound site (102).

7. The mannequin (100) according to any one of claims 2-4, further comprising a back flow system (190) including:
a branch connector connected to said pump (122);
a back flow conduit connected to said branch connector and said container (110); and
a check valve present in said back flow conduit; and
said flow controller (120) including a wound site conduit connecting said branch connector to said wound site (102).

8. The mannequin (100) according to any one of claims 1-7, further comprising:
a branch connector connected to said container (110) having one branch forming a flow path with said at least one wound site (102) and a second branch; and
a refill conduit connected to said second branch, said refill conduit having a connector.

9. The mannequin (100) according to any one of claims 1-8, wherein said plurality of wound sites (102) are in selective fluid communication with said flow controller (120).

10. The mannequin (100) according to claim 1, wherein
said body (100) includes a member in the shape of a torso (106);
said container (110) is located within said member;
said flow controller (120) includes:
a pump (122) in fluid communication with said container (110);
an activation mechanism (126) connected to said pump (122);
a manifold (128) connected to said pump (122);
a plurality of fluid dispersing lines (150) connected to said manifold (128), each fluid dispersing line (150) including:
a valve (1241-1246) connected to said manifold (128), and
one of said body connectors (1581-1586) connected to said valve (1241-1246); and
said mannequin further comprising a plurality of body parts (104, 108) for attachment to said member where said body parts (104, 108) are selected from a group including a head, a leg, and an arm, at least one said body parts (104, 108) includes:
said connector (159) of the body part capable of establishing fluid communication with the connector (1581-1586), and
said wound site (102) having an opening for dispersing fluid, said wound site (102) connected to said connector (159) of the body part.

11. The mannequin (100) according to claim 1, wherein
said flow controller (120) includes:
a pump (122) in fluid communication with said container (110, and
an activation mechanism (126) connected to said pump (122); and
said plurality of wound sites (102) having an opening for dispersing fluid, said wound sites (102) being in selective fluid communication with said pump (122).

12. The mannequin (100) according to claim 11, wherein said flow controller (120) includes
a manifold (128) in fluid communication with said pump (122);
a plurality of fluid dispersing lines (150) connected to said manifold (128), each fluid dispersing line (150) including:
a valve (1241-1246) connected to said manifold (128), and
one body connector (1581-1586) connected to said valve (1241-1246); and
wherein said at least one wound site (102) is detachably connected to at least one of said connector (1581-1586) in the torso area (106) of the mannequin (100).

13. The mannequin (100) according to claim 12, wherein said remote control (160) in communication with said activation mechanism (126).

## Patentansprüche

1. Eine Modellpuppe (100) zur Verwendung beim Hämorrhagie-Training, wobei die Modellpuppe aufweist:
einen Körper, der zumindest einem Abschnitt eines menschlichen Körpers ähnelt,
einen Behälter (110), der innerhalb des Körpers aufgenommen ist, wobei der Behälter (110) in der Lage ist, Fluid zu enthalten, um eine Blutung zu simulieren,
eine Strömungssteuervorrichtung (120), die innerhalb des Körpers aufgenommen und mit dem Behälter (110) in Fluidkommunikation ist,
**dadurch gekennzeichnet, dass** die Modellpuppe ferner aufweist:
eine Fernsteuerung (160) zum Steuern der Funktion der Strömungssteuervorrichtung (120), und
eine Mehrzahl von Wundenorten (102), die mit der Strömungssteuervorrichtung (120) in Fluidkommunikation sind, wobei jeder Wundenort (102) durch eine Leitung (150) für diesen Wundenort (102) mit der Strömungssteuervorrichtung (120) verbunden ist, wobei die Leitung (150) den Wundenort (102) mit einem Verbinder (159) eines Körperteils verbindet, wobei der Verbinder (159) eingerichtet ist, um an einem jeweiligen Verbinder (1581-1586) in einem Torsobereich (106) der Modellpuppe (100) angebracht zu sein, die in Fluidkommunikation mit der Strömungssteuervorrichtung (120) sind.

2. Die Modellpuppe (100) gemäß Anspruch 1, wobei die Strömungssteuervorrichtung (120) aufweist:
eine Pumpe (122) in Fluidkommunikation mit dem Behälter (110),
eine Stromversorgung (130), die in dem Körper aufgenommen ist, und
einen Aktivierungsmechanismus (126), der mit der Stromversorgung (130) und der Pumpe (122) verbunden ist.

3. Die Modellpuppe (100) gemäß Anspruch 2, wobei die Strömungssteuervorrichtung (120) ferner aufweist:
ein Ventil (124), das mit der Leitung (150) verbunden ist, die mit der Pumpe (122) verbunden ist, und
eine zweite Leitung, die das Ventil (124) mit dem Wundenort (102) verbindet.

4. Die Modellpuppe (100) gemäß Anspruch 3, wobei das Ventil (124) ein Solenoid aufweist, das elektrisch mit dem Aktivierungsmechanismus (126) verbunden ist.

5. Die Modellpuppe (100) gemäß irgendeinem der Ansprüche 2 bis 4, wobei die Strömungssteuervorrichtung (120) ferner aufweist:
einen Abzweigverbinder, der mit der Pumpe (122) verbunden ist,
ein erstes Ventil, das mit dem Abzweigverbinder verbunden ist,
eine erste Wundenortleitung, die mit dem ersten Ventil verbunden ist,
ein zweites Ventil, das mit dem Abzweigverbinder verbunden ist, und
eine zweite Wundenortleitung, die mit dem zweiten Ventil verbunden ist, und wobei der mindestens eine Wundenort (102) aufweist:
einen ersten Wundenort, der mit der ersten Wundenortleitung verbunden ist, und
einen zweiten Wundenort, der mit der zweiten Wundenortleitung verbunden ist.

6. Die Modellpuppe (100) gemäß irgendeinem der Ansprüche 2 bis 4, ferner aufweisend ein Rückflusssystem (190), welches aufweist:
einen Abzweigverbinder, der mit der Pumpe (122) verbunden ist,
eine Rückflussleitung, die mit dem Abzweigverbinder verbunden ist,
ein Rückschlagventil, das sich in der Rückflussleitung befindet, und
einen Rückflussbehälter (194), der mit der Rückflussleitung verbunden ist, und
wobei die Strömungssteuervorrichtung (120) eine Wundenortleitung aufweist, die den Abzweigverbinder mit dem Wundenort (102) verbindet.

7. Die Modellpuppe (100) gemäß irgendeinem der Ansprüche 2 bis 4, ferner aufweisend ein Rückflusssystem (190), welches aufweist:
einen Abzweigverbinder, der mit der Pumpe (122) verbunden ist,
eine Rückflussleitung, die mit dem Abzweigverbinder und dem Behälter (110) verbunden ist, und
ein Rückschlagventil, das sich in der Rückflussleitung befindet, und
wobei die Strömungssteuervorrichtung (120) eine Wundenortleitung aufweist, die den Abzweigverbinder mit dem Wundenort (102) verbindet.

8. Die Modellpuppe (100) gemäß irgendeinem der Ansprüche 1 bis 7, ferner aufweisend:
einen mit dem Behälter (110) verbundenen Abzweigverbinder, der eine Abzweigung, die mit dem mindestens einen Wundenort (102) einen Strömungspfad ausbildet, und eine zweite Abzweigung aufweist, und
eine Auffüllleitung, die mit der zweiten Abzweigung verbunden ist, wobei die Auffüllleitung einen Verbinder aufweist.

9. Die Modellpuppe (100) gemäß irgendeinem der Ansprüche 1 bis 8, wobei die Mehrzahl von Wundenorten (102) in selektiver Fluidkommunikation mit der Strömungssteuervorrichtung (120) ist.

10. Die Modellpuppe (100) gemäß Anspruch 1, wobei
der Körper (100) ein Element in der Form eines Torsos (106) aufweist,
der Behälter (110) innerhalb des Elements angeordnet ist,
die Strömungssteuervorrichtung (120) aufweist:
eine Pumpe (122) in Fluidkommunikation mit dem Behälter (110),
einen Aktivierungsmechanismus (126), der mit der Pumpe (122) verbunden ist,
eine Rohrverzweigung (128), die mit der Pumpe (122) verbunden ist,
eine Mehrzahl von Fluidverteilleitungen (150), die mit der Rohrverzweigung (128) verbunden sind, wobei jede Fluidverteilleitung (150) aufweist:
ein Ventil (1241-1246), das mit der Rohrverzweigung (128) verbunden ist, und
einen der Körperverbinder (1581-1586), der mit dem Ventil (1241-1246) verbunden ist, und
wobei die Modellpuppe ferner eine Mehrzahl von Körperteilen (104, 108) zum Anbringen an dem Element aufweist, wobei die Körperteile (104, 108) aus einer Gruppe ausgewählt sind, die einen Kopf, ein Bein und einen Arm aufweist, wobei mindestens einer der Körperteile (104, 108) aufweist:
den Verbinder (159) des Körperteils, der in der Lage ist, eine Fluidkommunikation mit dem Verbinder (1581-1586) herzustellen, und
den Wundenort (102), der eine Öffnung zum Verteilen von Fluid aufweist, wobei der Wundenort (102) mit dem Verbinder (159) des Körperteils verbunden ist.

11. Die Modellpuppe (100) gemäß Anspruch 1, wobei die Strömungssteuervorrichtung (120) aufweist:
eine Pumpe (122) in Fluidkommunikation mit dem Behälter (110), und
einen Aktivierungsmechanismus (126), der mit der Pumpe (122) verbunden ist, und
wobei die Mehrzahl von Wundenorten (102) eine Öffnung zum Verteilen von Fluid aufweist, wobei die Wundenorte (102) in selektiver Fluidkommunikation mit der Pumpe (122) sind.

12. Die Modellpuppe (100) gemäß Anspruch 11, wobei die Strömungssteuervorrichtung (120) aufweist:
eine Rohrverzweigung (128) in Fluidkommunikation mit der Pumpe (122),
eine Mehrzahl von Fluidverteilleitungen (150), die mit der Rohrverzweigung (128) verbunden sind, wobei jede Fluidverteilleitung (150) aufweist:
ein Ventil (1241-1246), das mit der Rohrverzweigung (128) verbunden ist, und
einen Körperverbinder (1581-1586), der mit dem Ventil (1241-1246) verbunden ist, und
wobei der mindestens eine Wundenort (102) lösbar mit mindestens einem von dem Verbinder (1581-1586) im Torsobereich (106) der Modellpuppe (100) verbunden ist.

13. Die Modellpuppe (100) gemäß Anspruch 12, wobei die Fernsteuerung (160) mit dem Aktivierungsmechanismus (126) in Kommunikation ist.

## Revendications

1. Mannequin (100) destiné à une utilisation dans la formation à la gestion d'une hémorragie, ledit mannequin comprenant :
un corps ressemblant au moins à une partie d'un corps humain ;
un contenant (110) logé dans ledit corps, ledit contenant (110) pouvant contenir un fluide pour simuler une hémorragie ;
un contrôleur d'écoulement (120) logé dans ledit corps et en communication de fluide avec ledit contenant (110) ;
**caractérisé en ce que** le mannequin comprend en outre
une télécommande (160) destinée à commander le fonctionnement du contrôleur d'écoulement (120) ; et
une pluralité de sites de blessures (102) en communication de fluide avec ledit contrôleur d'écoulement (120), où chaque site de blessure (102) est connecté audit contrôleur d'écoulement (120) par un conduit (150) pour ce site de blessure (102), le conduit (150) connectant le site de blessure (102) à un connecteur (159) d'une partie du corps, lequel connecteur (159) est conçu pour être fixé à un connecteur respectif (1581-1586) dans une zone de torse (106) du mannequin (100) en communication de fluide avec ledit contrôleur d'écoulement (120).

2. Mannequin (100) selon la revendication 1, où ledit contrôleur d'écoulement (120) comprend :
une pompe (122) en communication de fluide avec ledit contenant (110) ;
une alimentation électrique (130) logée dans ledit corps ; et
un mécanisme d'actionnement (126) connecté à ladite alimentation électrique (130) et à ladite pompe (122).

3. Mannequin (100) selon la revendication 2, où ledit contrôleur d'écoulement (120) comprend en outre :
une soupape (124) connectée audit conduit (150) connecté à ladite pompe (122) ; et
un second conduit connectant ladite soupape (124) audit site de blessure (102).

4. Mannequin (100) selon la revendication 3, où ladite soupape (124) comprend un solénoïde connecté électriquement audit mécanisme d'actionnement (126).

5. Mannequin (100) selon l'une quelconque des revendications 2 à 4, où ledit contrôleur d'écoulement (120) comprend en outre :
un connecteur d'embranchement connecté à ladite pompe (122) ;
une première soupape connectée audit connecteur d'embranchement ;
un premier conduit de site de blessure connecté à ladite première soupape ;
une seconde soupape connectée audit connecteur d'embranchement ; et
un second conduit de site de blessure connecté à ladite seconde soupape ; et
ledit ou lesdits sites de blessures (102) comprennent :
un premier site de blessure connecté audit premier conduit de site de blessure ; et
un second site de blessure connecté audit second conduit de site de blessure.

6. Mannequin (100) selon l'une quelconque des revendications 2 à 4, comprenant en outre un système de retour de fluide (190) comprenant :
un connecteur d'embranchement connecté à ladite pompe (122) ;
un conduit de retour de fluide connecté audit connecteur d'embranchement ;
une soupape anti-retour présente dans ledit conduit de retour de fluide ; et
un contenant de retour de fluide (194) connecté audit conduit de retour de fluide ; et
ledit contrôleur d'écoulement (120) comprenant un conduit de site de blessure connectant ledit connecteur d'embranchement audit site de blessure (102).

7. Mannequin (100) selon l'une quelconque des revendications 2 à 4, comprenant en outre un système de retour de fluide (190) comprenant :
un connecteur d'embranchement connecté à ladite pompe (122) ;
un conduit de retour de fluide connecté audit connecteur d'embranchement et audit contenant (110) ; et
une soupape anti-retour présente dans ledit conduit de retour de fluide ; et
ledit contrôleur d'écoulement (120) comprenant un conduit de site de blessure connectant ledit connecteur d'embranchement audit site de blessure (102).

8. Mannequin (100) selon l'une quelconque des revendications 1 à 7, comprenant en outre :
un connecteur d'embranchement connecté audit contenant (110) présentant une branche formant un chemin d'écoulement avec ledit ou lesdits sites de blessure (102) et une seconde branche ; et
un conduit de remplissage connecté à ladite seconde branche, ledit conduit de remplissage présentant un connecteur.

9. Mannequin (100) selon l'une quelconque des revendications 1 à 8, où ladite pluralité de sites de blessures (102) sont en communication de fluide sélective avec ledit contrôleur d'écoulement (120).

10. Mannequin (100) selon la revendication 1, où ledit corps (100) comprend un élément sous la forme d'un torse (106) ;
ledit contenant (110) se situe dans ledit élément ;
ledit contrôleur d'écoulement (120) comprend :
une pompe (122) en communication de fluide avec ledit contenant (110) ;
un mécanisme d'actionnement (126) connecté à ladite pompe (122) ;
une tubulure (128) connectée à ladite pompe (122) ;
une pluralité de lignes de dispersion de fluide (150) connectées à ladite tubulure (128),
chaque ligne de dispersion de fluide (150) comprenant :
une soupape (1241-1246) connectée à ladite tubulure (128), et
l'un desdits connecteurs de corps (1581-1586) connecté à ladite soupape (1241-1246) ; et
ledit mannequin comprenant en outre une pluralité de parties de corps (104, 108) destinées à être fixées audit élément, où lesdites parties de corps (104, 108) sont sélectionnées dans un groupe constitué par une tête, une jambe, et un bras, l'une au moins desdites parties de corps (104, 108) comprenant :
ledit connecteur (159) de la partie de corps pouvant établir une communication de fluide avec le connecteur (1581-1586), et
ledit site de blessure (102) présentant une ouverture de dispersion du fluide, ledit site de blessure (102) étant connecté audit connecteur (159) de la partie de corps.

11. Mannequin (100) selon la revendication 1, où ledit contrôleur d'écoulement (120) comprend :
une pompe (122) en communication de fluide avec ledit contenant (110), et un mécanisme d'actionnement (126) connecté à ladite pompe (122) ; et
ladite pluralité de sites de blessure (102) présentant une ouverture de dispersion du fluide, lesdits sites de blessures (102) étant en communication de fluide sélective avec ladite pompe (122).

12. Mannequin (100) selon la revendication 11, où ledit contrôleur d'écoulement (120) comprend :
une tubulure (128) en communication de fluide avec ladite pompe (122) ;
une pluralité de lignes de dispersion de fluide (150) connectées à ladite tubulure (128), chaque ligne de dispersion de fluide (150) comprenant :
une soupape (1241-1246) connectée à ladite tubulure (128), et
un connecteur de corps (1581-1586) connecté à ladite soupape (1241-1246) ; et
où ledit ou lesdits sites de blessures (102) sont connectés de manière amovible à l'un au moins desdits connecteurs (1581-1586) dans la zone de torse (106) du mannequin (100).

13. Mannequin (100) selon la revendication 12, où ladite télécommande (160) est en communication avec ledit mécanisme d'actionnement (126).
